# EUROPEAN PATENT APPLICATION

(11) **EP 4 390 019 A1**
(43) Date of publication of application: **26.06.2024**
(21) Application number: 22214720.9
(22) Date of filing: 19.12.2022
(51) Int. Cl.: E05B 81/76, E05B 17/10, E05B 79/06, E05B 85/10

(54) **ASSEMBLY FOR OPENING AND/OR CLOSING A VEHICLE DOOR**

(71) Applicant: MINEBEA ACCESSSOLUTIONS ITALIA S.P.A., 10044 Pianezza (IT)
(72) Inventor: FRATTINI, Massimo, 10044 PIANEZZA (IT); GRAMAGLIA, Alberto, 10044 PIANEZZA (IT)
(74) Representative: Germain Maureau

(57) **Abstract**

The present invention relates to an assembly for opening and/or closing a vehicle door comprising :
- a grip member (6) configured to be attached to an external side (44) of a vehicle door (4) comprising:
o a base (60) configured to extend from the vehicle door when the grip member is attached to the external side of the vehicle door,
o a gripping part (600) extending from the base, toward an upper direction when the grip member is attached to the external side of the vehicle door,

- an electronic switch subassembly (5) configured to be attached to the grip member and to be activated by a user's touch so as to send a signal to an electronic latch to open the door (4), the electronic switch subassembly comprising a switch contact area (522), facing towards the external side of the vehicle door when the grip member is attached to the external side of the vehicle door.

## Description

### Technical field

The present invention relates to an assembly for opening and/or closing a vehicle door, a vehicle door comprising said assembly and a method of mounting said assembly on a vehicle door.

### Background

Electronic assemblies for opening and/or closing a vehicle door generally comprise a handle and electronic means configured to unlock the vehicle door and to activate a latch, such as an electronic latch, to open the vehicle door.

As a matter of fact, nowadays, door system are becoming more and more electrical. It means that the handle can have no more mechanical connection to the latch to release it and this function is realized by an electrical signal. To generate this electrical signal from the handle different solutions can be used as switches or sensors. The most common solution used involve a mechanical switch.

It is known for example to arrange such a mechanical switch on an external side of the vehicle door, near the window of the vehicle door. Once touch by a user's hand, the mechanical switch activate an electronic latch causing the vehicle door to unlatch and open.

There is a constant need to improve the ways to open the vehicle door, in particular so that such ways are easy and intuitive for the user.

### Summary of the invention

To this end, according to an aspect, the invention concerns an assembly for opening and/or closing a vehicle door the assembly comprising :
a grip member configured to be attached to an external side of a vehicle door, the grip member comprising:
a base configured to extend from the vehicle door, for example the external side of the vehicle door, when the grip member is attached to the external side of the vehicle door,
a gripping part extending from the base, and toward an upper direction when the grip member is attached to the external side of the vehicle door,
an electronic switch subassembly configured to be attached to the grip member and configured to be activated by a user's touch so as to send a signal to an electronic latch to open the door.

The electronic switch subassembly comprising a switch contact area, facing towards the external side of the vehicle door when the grip member is attached to the external side of the vehicle door.

Due to the switch contact area arranged so as to face towards the vehicle door when the grip member is attached to the external side of the vehicle door, the switch contact area is easily and intuitively reachable by the user's hand when the user grabs the handle.

The assembly for opening and/or closing a vehicle door can comprise the following features, considered alone or in any technically possible combination.

The gripping part comprises a traction surface configured to allow exerting a traction on the grip member so as to pull on the vehicle door, the traction surface facing the vehicle door when the grip member is attached to the external side of the vehicle door and wherein the switch contact area is located within the traction surface when the electronic switch subassembly is attached to the grip member.

For example, the switch contact area opens on the traction surface side when the electronic switch subassembly is attached to the grip member.

For example, the switch contact extends from the traction surface when the electronic switch subassembly is attached to the grip member.

For example, the switch contact extends along the traction surface when the electronic switch subassembly is attached to the grip member.

For example, the assembly is arranged so that a thumb of a user's hand can touch a surface of the grip member facing downwards, for example a surface of the base of the grip member, while one or more other fingers of the user's same hand are touching the traction surface at the same time.

The assembly comprises a light source subassembly comprising a light source arranged so that at least part of the light source faces away from the vehicle door when the grip member is attached to the external side of the vehicle door.

The light source subassembly comprises a window part that is at least partially transparent, for example transparent, to the light emitted by the light source.

The electronic switch subassembly comprises at least two switch elements, each switch element comprising one or more switch(es), the switch elements being arranged at different positions with respect to the switch contact area so that a user's touch on the switch contact area activates at least one of the switches.

Each switch element comprises a first switch and a second switch, the switch subassembly being activated when:
at least one of the first switches is activated and
at least one of the second switches is activated.

The first switches and the second switches are configured such that the output signal sent by of each of the output signals of the first switches when activated is inverted with respect to the output signal sent by each of the second switches when activated.

The electric switch subassembly comprises a first electrical subcircuit connecting the first switches together, and a second electrical subcircuit connecting the second switch elements together, the first electrical subcircuit being distinct from the second electrical subcircuit.

The grip member comprises for each switch element, a corresponding contact subcircuit allowing activation of the one or more switch(es) of the switch element by a user's touch on the switch contact are.

The assembly comprises a housing comprising the electronic switch subassembly, the housing being configured so as to be received, at least in part within an inner space of the gripping part.

The housing is configured so as to be removably attached to the gripping part.

The assembly comprises a fixation element configured to be attached to the vehicle door, wherein an aperture is arranged in the fixation element so as to receive at least a part of the grip member.

According to a further aspect, the invention concerns a vehicle door comprising the assembly for opening and/or closing a vehicle door as previously described, and a belt line from which can extend a window glass.

For example, the grip member is attached to an external side of the vehicle door, at the belt line.

According to a further aspect, the invention concerns a method of mounting said assembly on a vehicle door the method comprising:
assembling the electronic switch subassembly to the grip member,
arranging at least a part of the assembled electronic switch subassembly and grip member in the aperture of the fixation element, and
attaching the fixation element to the vehicle door.

### Brief description of the drawings

Figure 1 shows an assembly for opening and/or closing a vehicle door according to an example of embodiment of the invention.
Figure 2 shows a vehicle door comprising the assembly for opening and/or closing a vehicle door according to an example of embodiment of the invention.
Figure 3 is a cross-sectional view of a part of the assembly for opening and/or closing a vehicle door according to an example of embodiment of the invention.
Figure 4 shows a lower face of a printed circuit board according to an example of the invention.
Figure 5 shows an upper face of a printed circuit board according to an example of the invention.
Figure 6 is a cross-sectional view of a part of the assembly for opening and/or closing a vehicle door according to an example of embodiment of the invention.
Figure 7 shows an exploded view of the grip member, the electronic switch subassembly and the fixation element of the assembly according to an example of the invention.

### Description of the embodiments

### Assembly

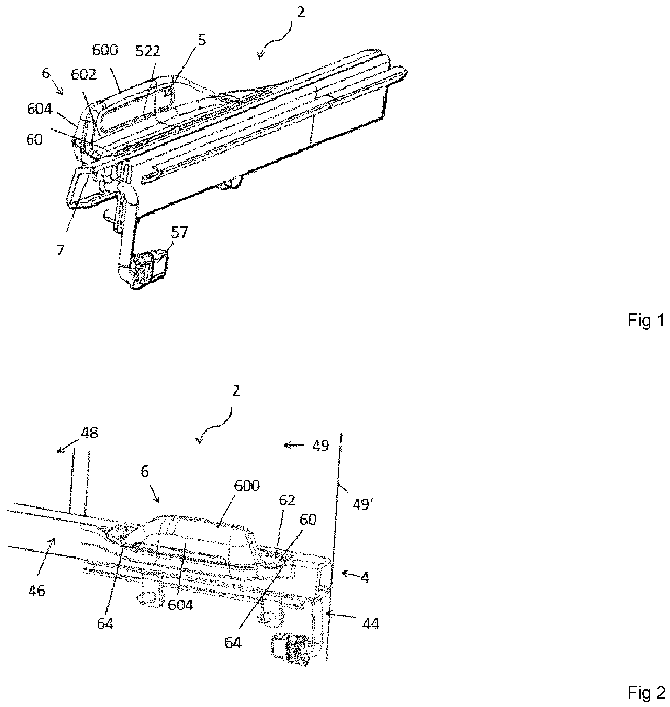

Figure 1 illustrates an assembly 2 for opening and/or closing a vehicle door according to the invention.

The assembly 2 comprises a grip member 6 configured to be attached to a vehicle door 4, for example an external side 44 of the vehicle door 4 (figure 2) and an electronic switch subassembly 5 configured to be activated by a user's touch so as to send a signal to an electronic latch (not shown) to open the vehicle door 4.

The vehicle door 4 is for example a lateral door of the vehicle or the trunk door.

### Grip member

The grip member 6 is configured to be arranged at a belt line 46 of the vehicle door 4, from which can extend a window glass 48 for example (figure 2).

The grip member 6 is dimensioned so as to be graspable by the user's hand.

The grip member 6 is dimensioned so as to allow exerting a traction on the grip member 6 so as to pull on the vehicle door 4 to open the vehicle door 4, when the grip member is attached to the vehicle door. The grip member 6 is further dimensioned so as to allow exerting a pressure on the grip member 6 so as to push on the vehicle door 4 to close the vehicle door 4, when the grip member is attached to the vehicle door.

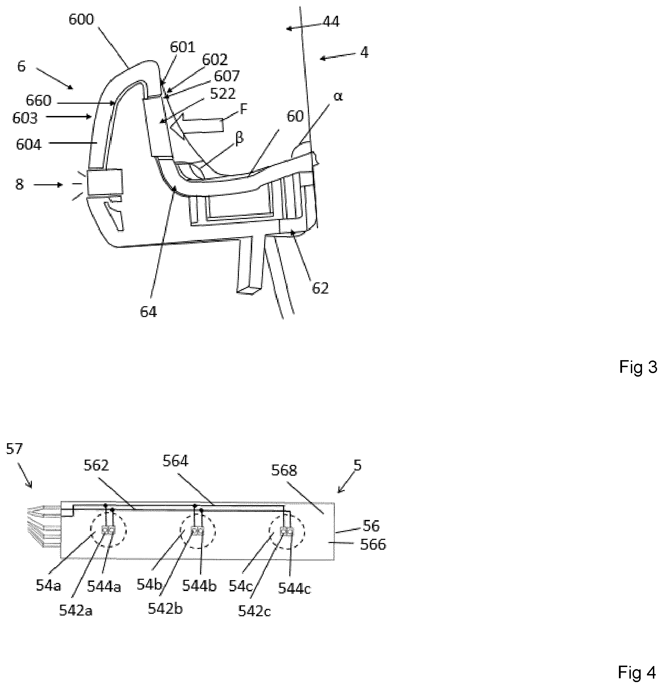

The grip member 6 comprises a base 60 configured to extend from the vehicle door 4, for example the external side 44 of the vehicle door, when the grip member 6 is attached to the vehicle door 4, for example to the external side 44 of the vehicle door 4 as illustrated in figure 3.

For example, the base 60 can extend at an angle "α" comprised between 70° and 110° with respect to the external side 44 of the vehicle door 4.

For example, the base 60 can extend at an angle "α" of 90° with respect to the external side 44 of the vehicle door 4.

For example, the base 60 can extend perpendicularly with respect to the external side 44 of the vehicle door 4.

The grip member 6 comprises a gripping part 600 extending from the base 60. The gripping part 600 is intended to be grasped by the user's hand.

The gripping part 600 is configured to extend from the base 60 toward an upper direction when the grip member 6 is attached to the external side 44 of the vehicle door 4.

For example, the gripping part 600 can extend at an angle "β" comprised between 70 and 110° with respect to the base 60 of the grip member 6.

For example, the gripping part 600 can extend at an angle "β" of 90° with respect to the base 60 of the grip member 6.

For example, the gripping part 600 can extend perpendicularly with respect to the base 60 of the grip member 6.

For example, the gripping part 600 can extend with respect to the base 60 so that the grip member 6 has a "L-shape".

For example the grip member 6 is a "L-shape" grip member 6.

The base 60 can comprise a first edge 62 proximal to the external side 44 of the vehicle door 4 when the grip member 6 is attached to the vehicle door 4, and an opposite second edge 64, distal to the external side 44 of the vehicle door 4 when the grip member 6 is attached to the vehicle door 6.

For example the gripping part 600 extends from the distal edge 64 of the base 60of the grip member 6.

This configuration permits to the gripping part 600 to extend away from the external side 44 of the vehicle door 4 when the grip member 6 is attached to the vehicle door 4.

As illustrated in figure 3, the gripping part 600 can comprise an inner space 660 defined between a first wall 601 and a second wall 603 of the gripping part 600.

For example, the first wall 601 extends from the base 60, for example from the distal edge 64 of the base 60 of the grip member 6. For example, the first wall 601 from the base 60 toward an upper direction when the grip member 6 is attached to the vehicle door 4.

For example, the second wall 603 extends from the first wall 601 so as to form the inner space 660 of the gripping part 600.

For example, the first wall 601 and the second wall 603 are arranged so as to form the inner space 660 of the gripping part.

For example, the inner space 660 of the gripping part 600 is dimensioned so as to receive at least a part of the electronic switch subassembly 5.According to the present invention, the gripping part can comprise a traction surface 602 configured to allow exerting a traction (represented by the arrow "F") on the grip member 6 so as to pull on the vehicle door 4.

For example the traction surface 602 is configured to be disposed facing the vehicle door 4 when the grip member 6 is attached to the external side 44 of the vehicle door. It is to be understood that the traction surface 602 is facing towards the external side 44 of the vehicle door 4 when the grip member 6 Is attached to the vehicle door

For example, the first wall 601 of the gripping part 600 comprises the traction surface 602.

For example, the first wall 601 comprises a first surface facing the second wall 603 and a second surface, opposite to the first surface, the second surface being the traction surface 602.

For example, the gripping part 600 can comprise a pressure surface 604 configured to allow exerting a pressure on the grip member 6 so as to push on the vehicle door. For example, the second wall 603 of the gripping part 600 comprises the pressure surface 604.

For example the pressure surface 604 is arranged opposite to the traction surface 602.

The base 60 and the gripping part 600 can be formed in one piece, for example the base 60 and the gripping part 600 form a single piece.
electronic switch subassembly

The electronic switch subassembly 5 is configured to be activated by a user's touch so as to send a signal to an electronic latch (not shown) to open the vehicle door.

According to the invention, the electronic switch subassembly 5 is attached to the grip member 6 (figure 1).

For example at least a part of the electronic switch subassembly 5 can be received within the inner space 660 of the gripping part 600 and attached to the gripping part 600, for example by clipping means.

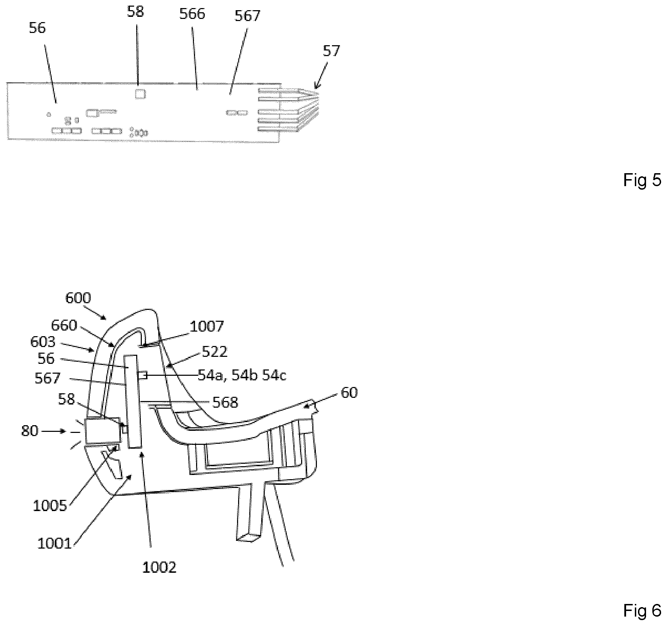

As illustrated in figure 6, the electric switch subassembly 5 comprises a switch contact area 522.

The switch contact area 522 is configured to be touched by one or more fingers of the user, for example the fingers other than a thumb of the user when the grip member is attached to the vehicle door.

The switch contact area 522 participates in activating the electronic switch subassembly when the switch contact area 522 is touched by the user's fingers.

The assembly 2 is arranged so that the switch contact area 522 can be touch by said other fingers when the user grabs the gripping part of the grip member 6.

The switch contact area 522 is facing towards the vehicle door 4, for example the external side 44 of the vehicle door 4, when the grip member 6 is attached to the external side 44 of the vehicle door. The switch contact area 522 is facing the external side 44 of the vehicle door 4, when the grip member 6 is attached to the external side 44 of the vehicle door 4.

The switch contact area 522 is facing away from the user, for example, when the user is standing in front of the vehicle door, for example standing in front of the external side 44 of the vehicle door.

The switch contact is located within the traction surface 602.

For example, the switch contact area 522 is arranged on the side of the traction surface of the grip member 6.

For example, the switch contact area 522 opens on the side of the traction surface 602 of the grip member 6 when the electronic switch subassembly 5 is attached to the grip member 6.

For example, the switch contact area 522 can extend from the switch contact area 522 when the electronic switch subassembly 5 is attached to the grip member 6.

According to an embodiment of the invention, the switch contact area 522 extends along a part of the traction surface 602 of the grip member 6 when the electronic switch subassembly 5 is attached to the grip member 6.

For example, the switch contact area 522 can be attached to the traction surface 602, for example to the first wall 601 comprising the traction surface 602.

For example, the switch contact area 522 can be overmolded, or obtained by overmolding, for example over the gripping part 600 of the grip member, for example, over the edges of an opening 607 arranged within the first wall 601 of the gripping part 600. This allows for a tight connection between the grip member 6 and the switch contact area 522.

According to another embodiment of the invention illustrated in figures 3 and 6, the switch contact area 522 can be, at least in part, received within the opening 607 of the first wall 601 comprising the traction surface 602 of the grip member 6.

The assembly is arranged so that a thumb of a user's hand can touch a surface of the grip member facing downwards, for example a surface of the base of the grip member, while one or more other fingers of the user's same hand are touching the traction surface 602 at the same time.

The arrangement of the switch contact area 522 allows the user's hand to reach both the traction surface 602 and the switch contact area 522 at the same time.

Further this arrangement allows the user to activate the electronic switch subassembly 5 and to exert a traction on the traction surface 602 of the grip member 6 with a single gesture, by means of the same fingers.

The switch contact area 522 can be operable as a traction surface to allow exerting a traction on the grip member 6 so as to pull on the vehicle door 4.

The switch contact area 522 can comprise or be made of elastic material(s), for example rubber.

For example, the switch contact area 522 comprises a membrane 522' (figure 6), for example made of elastic material(s), for example rubber.

The electronic switch subassembly 5 can comprise at least two switch elements 54a, 54b, 54c (figure 4).

The at least two switch elements 54a, 54b, 54c are facing towards the vehicle door when the grip member 6 is attached to the external side of the vehicle door (figure 6).

Each switch element 54a, 54b, 54c comprises one or more switch(es) 542a, 542b, 542c, 544a, 544b, 544c. The switch elements are arranged at different positions with respect to the switch contact area 522 so that a user's touch on the switch contact area 522 activates at least one of the switches (figure 6).

For example, the at least three switch elements 54a, 54b, 54c can be arranged at different positions, with respect to the switch contact area, so that a user's touch on the switch contact area 522 activates at least one of the at least three switches 542a, 542b, 542c, 544a, 544b, 544c.

For example, the at least three switch elements 54a, 54b, 54c can be arranged at different positions, with respect to switch contact area, so that a user's touch on the switch contact area 522 activates at least one of the at least three switches 542a, 542b, 542c, 544a, 544b, 544c.

Due to the use of several switch elements arranged at different positions with respect to the switch contact area, the user is sure to activate the switch by touch without having to probe several areas of the door.

The switch subassembly 5 can comprise at least three such switch elements 54a, 54b, 54c, for instance the first switch element 54a, the second switch element 54b and a third switch element 54c. Each switch element can thus comprise one or more switch(es) 542a, 542b, 542c, 544a, 544b, 544c. The at least three switch elements 54a, 54b, 54c can be arranged at different positions, with respect to the contact surface area, so that a user's touch on the switch contact area 522 activates at least one of the at least three switches 542a, 542b, 542c, 544a, 544b, 544c.

Due to the use of three switch elements arranged at different positions with respect to the switch contact area, the user is even more sure to activate the switch by touch without having to probe several areas of the door.

Having such three switch elements so located allows for covering the switch contact area to ensure that activation is obtained upon touching the switch contact area.

The switch subassembly is for example activated when at least two of the switches 542a, 542b, 542c, 544a, 544b, 544c are activated. This reduces the risks for an incorrect activation.

Each switch element 54a, 54b, 54c comprises a first switch 542a, 542b, 542c and a second switch 544a, 544b, 544c. The switch subassembly is activated when, for instance only when at least one of the first switches 542a, 542b, 542c is activated and at least one of the second switches 544a, 544b, 544c is activated. This allows for increased reliability of the activation in that it limits unwanted activations or incorrect activations, for instance when one switch 54a, 54b, 54c is activated by mistake or when one of the first switches 542a, 542b, 542c or related circuit is damaged and activates by mistake while the second switches 544a, 544b, 544c and related circuit are functional, or one of the second switches 544a, 544b, 544c or related circuit is damaged and activates by mistake while the first switches 542a, 542b, 542c and related circuit are functional,

The first switch element 54a comprises the first first switch 542a and the first second switch 544a. The second switch element 54b comprises the second first switch 542b and the second second switch 544b. For example, the third switch element 54c comprises the third first switch 542c and the third second switch 544c. For example, activation can result from the first first switch 542a and the first second switch 544a being activated, but activation can also result from the first first switch 542a and the third second switch 544c being activated.

The first switches 542a, 542b, 542c and the second switches 544a, 544b, 544c can be configured such that the output signal sent by of each of the output signals of the first switches 542a, 542b, 542c when activated is inverted with respect to the output signal sent by each of the second switches 544a, 544b, 544c when activated. The first switches 542a, 542b, 542c and the second switches 544a, 544b, 544c can be configured such that the output signal sent by of each of the output signals of the first switches 542a, 542b, 542c when not activated is inverted with respect to the output signal sent by each of the second switches 544a, 544b, 544c when not activated. Therefore, the output signals of each of the first switches 542a, 542b, 542c are inverted to the output signals of the second switches 544a, 544b, 544c. This further reduces the risks of false activation of the subassembly as two different output signals are required.

For example, each of the first switches 542a, 542b, 542c sends an output signal, indicating an open signal by default, the corresponding circuit part being open, and only if the output signal indicates a closed state, the corresponding circuit part being closed, by instance so as to let the current pass or so as to form a short-circuit, the same first switch 542a, 542b, 542c is activated. For example, each of the second switches 544a, 544b, 544c sends an output signal, indicating a closed state by default, the corresponding circuit part being closed by default, by instance so as to let the current pass or so as to form a short-circuit, and only if the output signal indicates an open state, the corresponding circuit part being open, the same second switch 544a, 544b, 544c is activated.

The first switches 542a, 542b, 542c can for example be break contact switch(es) and/or a make contact switch(es). For example, each of the first switches 542a, 542b, 542c can be a break contact switch, or each of the first switches 542a, 542b, 542c can be a make contact switch(es). For example, each of the second switches 544a, 544b, 544c can be a break contact switch, or each of the first switches 544a, 544b, 544c can be a make contact switch. For example, each of the first switches 542a, 542b, 542c can be a break contact switch, and each of the second switches 544a, 544b, 544c can be a make contact switch. For example, each of the first switches 542a, 542b, 542c can be a make contact switch, and each of the second switches 544a, 544b, 544c can be a break contact switch.

As illustrated in figure 4, the electronic switch subassembly 5 comprises a first electrical subcircuit 562 connecting the first switches 542a, 542b, 542c together. The electronic switch subassembly 5 comprises a second electrical subcircuit 564 connecting the second switch elements 544a, 544b, 544c together. The first electrical subcircuit 562 being distinct from the second electrical subcircuit 564. This allows for further reduction of the risks of false activation of the subassembly, by strictly separating the functioning of the first switches and of the second switches.

For instance, the first electrical subcircuit 562 and second electrical subcircuit 564 are not electrically connected in the subassembly.

The switch subassembly 5 can comprise exactly the three switch elements 54a, 54b, 54c, each comprising the one or more switch(es) 542a, 542b, 542c, 544a, 544b, 544c, the exactly three switch elements 54a, 54b, 54c, being arranged at different positions with respect to the switch contact area so that a user's touch on the switch contact area 522 activates at least one of the switches 54a, 54b, 54c. This number of switch elements 54a, 54b, 54c, allows optimizing the result of having a switch contact area 522, which has a size dimensioned with respect to a human's hand, fully sensitive while limiting the number of components, and thus simplifying the fabrication and associated costs.

As illustrated in figure 6, the at least two switch elements 54a, 54b, 54c can be arranged within the inner space 660 of the gripping part 600 of the grip member 6.

The at least two switch elements 54a, 54b, 54c can be activated by a user's touch on the switch contact area 522. The at least two switch elements 54a, 54b, 54c can be reach through the opening 607 of the gripping part 600 when the user touch the switch contact area 522.

### Printed circuit board subassembly

The electronic switch subassembly 5 comprises a printed circuit board subassembly 56. The printed circuit board subassembly 56 comprising the at least two switch elements (fig. 4), for example the at least three switch elements 54a, 54b, 54c. The printed circuit board subassembly 56 comprises the first electrical subcircuit 562 and the second electrical subcircuit 564 (fig. 5).

The printed circuit board assembly comprises a printed circuit board 566. The printed circuit board 566 comprises the first electrical subcircuit 562 and the second electrical subcircuit 564, for instance the first electrical subcircuit 562 and the second electrical subcircuit 564 forming parts of the printed circuit(s) of the printed circuit board 566. The printed circuit board 566 presents the at least two switch elements, for example the at least three switch elements 54a, 54b, 54c, the at least three switch elements 54a, 54b, 54c being electrically connected to the printed circuit(s) of the printed circuit board 566, for instance by welding.

The printed circuit board subassembly 56, for instance the printed circuit board 566, comprise a first face 567 and a second face 568. The first face 567 and the second face 568 are opposite faces. The second face 568 faces the switch contact area. The second face 568 can present the first electrical subcircuit 562 and the second electrical subcircuit 564 at its surface. The second face 568 can present the at least two switch elements, for example the at least three switch elements 54a, 54b, 54c.

For example, the second face 568 of the printed circuit board subassembly is facing towards the vehicle door when the grip member 6 is attached to the vehicle door, and the first face 567 of the printed circuit board subassembly is facing away from the vehicle door when the grip member is attached to the vehicle door.

### Grip member corresponding contact subcircuit

According to the invention, the switch elements 54a, 54b, 54c can be activated mechanically.

Alternatively, the grip member can comprises, for each switch element 54a, 54b, 54c, a corresponding contact subcircuit allowing activation of the one or more switch(es) of the switch element by a user's touch on the switch contact area 522, for instance on a corresponding part of the switch contact area 522.

The contact subcircuits can extend for example on a surface of the grip member facing downwards when the grip member is attached to the vehicle door.

For example, the contact subcircuits can extend on the first surface 66 of the base 60 of the grip member.

For example, the grip member comprises, for the first switch element 54a, a corresponding first contact subcircuit allowing activation of the first first switch and/or of the first second switch 544a by a user's touch on the switch contact area 522. For example, the grip member comprises, for the second switch element 54b, a corresponding second contact subcircuit allowing activation of the second first switch 542b and/or of the second second switch 544b by a user's touch on the switch contact area 522. For example, the grip member comprises, for the third switch element 54c, a corresponding third contact subcircuit allowing activation of the third first switch 542c and/or of the third second switch 544c by a user's touch on the switch contact area 522.

### Light source subassembly

The assembly 2 can comprise a light source subassembly 8 comprising a light source 58 arranged so that at least part of the light source faces away from the vehicle door when the grip member is attached to the external side of the vehicle door (figure 6).

For example, the light source 58 is arranged so that the emitted light illuminates an area around the grip member 6 so that the user can reach the switch contact area 522 when the electronic switch subassembly 5 is attached to the grip member 6.

The light source 58 is for example located under the switch contact area 522 with respect to the vehicle door (figure 6), for example, when the grip member (6) is attached to the external side of the vehicle door.

For example, the light source 58 is arranged on the printed circuit board 566 of the electronic switch subassembly (figure 5).

For example, the light source 58 is arranged on the first face 567 of the printed circuit board 566.

For example, the printed circuit board 566 presents the first electrical subcircuit 562 and the second electrical subcircuit 564 at its surface, and/or a light source 58 at its surface.

For example, the light source 58 can comprise or be one or several light-emitting diode(s).

For example, the light source 58 is arranged under the second wall 603 of the gripping part 600, for example when the grip member (6) is attached to the external side of the vehicle door.

The light source subassembly comprises a window part 80 that is at least partially transparent, for example transparent, to the light emitted by the light source 58.

The window part 80 is for example located under the switch contact area 522 with respect to the vehicle door.

For example, the window part 80 is arranged under the gripping part 600, for example under the second wall 603 of the gripping part 600 of the grip member 6, for example when the grip member (6) is attached to the external side of the vehicle door.

### Housing

The assembly 1 can comprise a housing 1001.

The housing 1001 can comprise the electronic switch subassembly 5 and the light source subassembly 8.

For example, the housing 1001 can comprise an inner space 1002 dimensioned so as to receive the light source 58 of the light source subassembly 8 and the at least two switch elements 54a, 54b, 54c of the electronic switch subassembly 5.

For example, the inner space 1002 can be dimensioned so as to receive the printed circuit board subassembly 56, for example comprising both the light source 58 and the at least two switch elements 54a, 54b, 54c.

Figure 6 shows the light source 58 and the switch elements 54a, 54b, 54c arranged within the inner space 1002 of the housing.

For example, the housing is waterproof.

For example, the window part 80 of the light source subassembly 8 can be arranged on the housing 1001, for example on a lower part of the housing 1001.

For example, the housing can comprise a first aperture 1005 configured to receive at least a part of the window part 80.

For example, the first aperture 1005 is arranged on a lower part of the housing 1001.

The window part 80 can be received, at least in part, in the first aperture 1005.

For example, the window part 80 can be fixed to the housing 1001 by means of clipping means.

For example, the window part 80 can be sealed to the housing 1001 so as to form a waterproof seal.

For example, the switch contact area 522 of the electronic switch subassembly 5 can be arranged on the housing 1001, for example on an upper part of the housing 1001.

For example, the switch contact area 522 can be arranged on a part of the housing 1001 opposite to the part of the housing 1001 wherein the window part 80 is arranged.

For example, the housing 1001 can comprise a second aperture 1007 configured to receive at least a part of the switch contact area 522.

For example, the second aperture 1007 is arranged on an upper part of the housing 1001.

The switch contact area 522 can be received, at least in part, in the second aperture 1007.

For example, the switch contact area 522 can be fixed to the housing 1001 by means of clipping means.

For example, the window part 80 can be sealed to the housing 1001 so as to form a waterproof seal.

The housing 1001 is configured so as to be received, at least in part, within the inner space 660 of the gripping part 600 of the grip member 6. The housing 1001 can be received and attached to the inner space 660 of the gripping part 600 by means of clipping means.

It is to be understood that the housing is removably attached to the inner space 660 of the gripping part 600 of the grip member 6.

This allows a modular assembly 2 which can be arranged in a wide variety of grip members 6.

For example, the assembly 2 is arranged so that when the housing 1001 is received within the inner space 660 of the gripping part 600, the switch contact area 522 passes through the opening 607 of the gripping part 600 and opens on the side of the traction surface 602 of the grip member 6.

For example, the assembly 2 is arranged so that when the housing 1001 is received within the inner space 660 of the gripping part 600, the window part 80 is arranged under the gripping part 600, for example under the second wall 603 of the gripping part 600 of the grip member 6, for example when the grip member (6) is attached to the external side of the vehicle door.

### Electrical connection means

The electronic switch subassembly 5 can comprise electrical connection means 57 for electrically connecting the printed circuit board assembly 56 to the electrical latch.

The electrical connection means 57 comprise one or several electrical wire(s), for example a cable surrounding the wire(s), the electrical wire(s) being provided with connections at their both ends.

### Fixation element

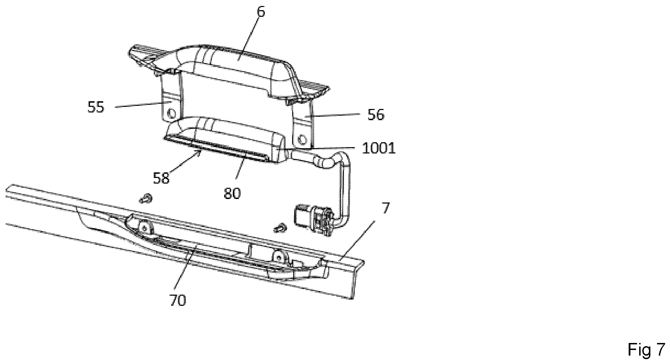

The assembly can comprise a fixation element 7 (figures 1 and 7) configured to be attached to the vehicle door 4.

For example, the fixation element 7 is configured to be attached to an inner side of the vehicle door.

The fixation element 7 can comprises an aperture 70 arranged in the fixation element so as to receive at least a part the grip member 6 and the housing 1001.

For example, the aperture 70 opens to the external side 44 of the vehicle door when the fixation element is attached to the inner side of the vehicle door.

### Vehicle door

A vehicle door 4 is described.

The vehicle door 4 comprises the assembly 2 for opening and/or closing a vehicle door hereabove and a belt line 46 from which can extend a window glass 48 (figure 2).

The beltline 46 is a line representing the bottom edge of a vehicle's glass panels.

The grip member 6, to which the electronic switch subassembly 5 is attached, for example by means of the housing 1001, is for example attached to an external side 44 of the vehicle door, for example at the belt line 46.

The grip member 6, to which the electronic switch subassembly 5 is attached, is for example arranged at the belt line 46, for example between a window glass 48 and an end portion 49 of the vehicle door 4.

The term « end portion of the vehicle door » means a portion comprising an edge of the vehicle door, a free end 49' of the vehicle door.

### Method for opening

A method for opening a vehicle door 4 by means of the assembly 2 is described. The method comprises the activation of the at least one electronic switch subassembly 5 by a user's touch so as to send a signal to an electronic latch to open the door 4. The activation of the at least one electronic switch subassembly 5 comprises, in response to a user's touch on the switch contact area 522, a step of activation of at least one of the switches 542a, 542b, 542c, 544a, 544b, 544c, for instance as described hereabove.

The signal to an electronic latch to open the door 4 can also comprise a signal to unlock the door 4.

### Method for obtaining a subassembly

A method for obtaining the subassembly 5 is described. The method comprises assembling the switch contact area 522 and the printed circuit board assembly 56.

### Method for mounting

A method for mounting the assembly on a vehicle door is described.

The method comprises assembling the electronic switch subassembly 5 to the grip member 6.

For example, the method can comprise inserting at least a part of the housing 1001 within the inner space 660 of the gripping part 600 and fixing the housing 1001 to the gripping part 600.

For example, the housing 1001 can be inserted into the inner space 660 of the gripping part 600 from a lower side of the grip member 6.

The method comprises arranging at least a part of the assembled housing 1001 and grip member 6 in the aperture 70 of the fixation element 7.

The method comprises attaching the fixation element 7 to the vehicle door 4.

According to the invention, the housing 1001 can be inserted into the grip member 6 and attached to the grip member 6, for example by means of clipping means, and then attached to the fixation element 7. By creating such a modular assembly, it can reproduce the aesthetic area and keep the functional volume of the switch inside the grip member 6 in a water-protected volume. The assembly can fit also other functions like a courtesy light module and comprises for example a light module configured to project a light form on the ground, for example a symbol, for example a logo.

## Claims

1. Assembly (2) for opening and/or closing a vehicle door, the assembly (2) comprising:
- a grip member (6) configured to be attached to an external side (44) of a vehicle door (4), the grip member (6) comprising:
∘ a base (60) configured to extend from the vehicle door when the grip member is attached to the external side of the vehicle door,
∘ a gripping part (600) extending from the base (60), and toward an upper direction when the grip member (6) is attached to the external side of the vehicle door,
- an electronic switch subassembly (5) configured to be attached to the grip member (6) and configured to be activated by a user's touch so as to send a signal to an electronic latch to open the door (4), the electronic switch subassembly (5) comprising a switch contact area (522), facing towards the external side (44) of the vehicle door (4) when the grip member (6) is attached to the external side of the vehicle door.

2. Assembly (2) for opening and/or closing a vehicle door according to claim 1 wherein the gripping part (600) comprises a traction surface (602) configured to allow exerting a traction on the grip member (6) so as to pull on the vehicle door (4), the traction surface (602) facing the vehicle door (4) when the grip member (6) is attached to the external side of the vehicle door (4) and wherein the switch contact area (522) is located within the traction surface (602) when the electronic switch subassembly (5) is attached to the grip member (6).

3. Assembly (2) for opening and/or closing a vehicle door according to claim 1 or 2 wherein the assembly (2) comprises a light source subassembly (8) comprising a light source (58) arranged so that at least part of the light source faces away from the vehicle door when the grip member (6) is attached to the external side of the vehicle door.

4. Assembly (2) for opening and/or closing a vehicle door according to claim 3 wherein the light source subassembly (58) comprises a window part (80) that is at least partially transparent, for example transparent, to the light emitted by the light source (58).

5. Assembly (2) for opening and/or closing a vehicle door according to any of the preceding claims wherein the electronic switch subassembly (5) comprises at least two switch elements (54a, 54b, 54c), each switch element (54a, 54b, 54c) comprising one or more switch(es) (542a, 542b, 542c, 544a, 544b, 544c), the switch elements being arranged at different positions with respect to the switch contact area (522) so that a user's touch on the switch contact area (522) activates at least one of the switches.

6. Assembly (2) for opening and/or closing a vehicle door according to the preceding claim wherein each switch element (54a, 54b, 54c) comprises a first switch (542a, 542b, 542c) and a second switch (544a, 544b, 544c), the switch subassembly being activated when:
- at least one of the first switches (542a, 542b, 542c) is activated and
- at least one of the second switches (544a, 544b, 544c) is activated.

7. Assembly (2) for opening and/or closing a vehicle door according to claim 5 or 6 wherein the first switches (542a, 542b, 542c) and the second switches (544a, 544b, 544c) are configured such that the output signal sent by of each of the output signals of the first switches (542a, 542b, 542c) when activated is inverted with respect to the output signal sent by each of the second switches (544a, 544b, 544c) when activated.

8. Assembly (2) for opening and/or closing a vehicle door according to claim 6 or 7 wherein the electric switch subassembly (5) comprises a first electrical subcircuit (562) connecting the first switches (542a, 542b, 542c) together, and a second electrical subcircuit (564) connecting the second switch elements (544a, 544b, 544c) together, the first electrical subcircuit (562) being distinct from the second electrical subcircuit (564).

9. Assembly (2) for opening and/or closing a vehicle door according to any of the preceding claims comprising a housing (1001) comprising the electronic switch subassembly (5), the housing (100) being configured so as to be received, at least in part within an inner space (660) of the gripping part (600).

10. Assembly (2) for opening and/or closing a vehicle door according to claim 9 wherein the housing (100) is configured so as to be removably attached to the gripping part (600).

11. Assembly (2) for opening and/or closing a vehicle door according to any of the preceding claims comprising a fixation element (7) configured to be attached to the vehicle door, wherein an aperture (70) is arranged in the fixation element (7) so as to receive at least a part of the grip member (6).

12. Vehicle door (4) comprising:
- the assembly for opening and/or closing a vehicle door according to any of the preceding claims,
- a belt line (46) from which can extend a window glass (48).

13. Vehicle door (4) according to claim 12 wherein the grip member (6) is attached to an external side of the vehicle door (44), at the belt line (46).

14. Method for mounting an assembly according to claim 13 on a vehicle door, the method comprising:
- assembling the electronic switch subassembly (5) to the grip member (6)
- arranging at least a part of the assembled electronic switch subassembly (5) and grip member (6) in the aperture (70) of the fixation element (7), and
- attaching the fixation element (7) to the vehicle door (4).
